# EUROPÄISCHE PATENTSCHRIFT

(11) **EP 2 380 330 B1**
(45) Veröffentlichungstag und Bekanntmachung des Hinweises auf die Patenterteilung: **17.12.2014**
(21) Anmeldenummer: 11702273.1
(22) Anmeldetag: 09.02.2011
(51) Int. Cl.: H04L 29/06, H04N 7/173, H04L 29/08

(54) **VERFAHREN UND VORRICHTUNG ZUR AUTHENTIFIZIERUNG VON BENUTZERN EINES HYBRIDENDGERÄTES**
METHOD AND DEVICE FOR AUTHENTICATING USERS OF A HYBRID TERMINAL
PROCÉDÉ ET DISPOSITIF D'AUTHENTIFICATION D'UTILISATEURS D'UN TERMINAL HYBRIDE

(30) Priorität: 10.02.2010 DE 102010007718
(43) Veröffentlichungstag der Anmeldung: 26.10.2011
(73) Patentinhaber: teveo interactive GmbH, 20354 Hamburg (DE)
(72) Erfinder: WAGNER, Matthias, 25355 Barmstedt (DE); KARANAS, Andreas, 22297 Hamburg (DE)
(74) Vertreter: Stork Bamberger
(86) Internationale Anmeldenummer: PCT/EP2011/051911
(87) Internationale Veröffentlichungsnummer: WO 2011/098494

(56) Entgegenhaltungen:
- WO-A2-2008/113827
- US-A1- 2010 031 290
- IGNACIO MÃ Â S ET AL: "IMS-TV: An IMS-based architecture for interactive, personalized IPTV", IEEE COMMUNICATIONS MAGAZINE, IEEE SERVICE CENTER, PISCATAWAY, US, Bd. 46, Nr. 11, 1. November 2008 (2008-11-01), Seiten 156-163, XP011239048, ISSN: 0163-6804, DOI: DOI:10.1109/MCOM.2008.4689259

## Beschreibung

Die vorliegende Erfindung betrifft ein Verfahren und eine Vorrichtung zur Authentifizierung von Benutzern eines Hybridendgerätes.

Derartige Verfahren kommen zur Registrierung und Authentisierung eines Benutzers von Fernsehgeräten und Satellitenempfängern zum Einsatz, die neben dem eigentlichen Empfangsteil für Fernsehprogramme über eine zusätzliche Internetschnittstelle verfügen.

Bekannt sind Verfahren und Vorrichtungen zur Authentifizierung von Fernsehgerätebenutzern.

Aus der Druckschrift DE 10 2006 045 352 A1 geht ein Single-Sign-On-Verfahren für die Nutzung einer Set-Top-Box mit einer Internet und einer Breitbandschnittstelle hervor. Mittels einer von einem Anbieter zu Verfügung gestellten Anmelde- und Authentifizierungsfunktion erfolgt eine Benutzerauthentifizierung nach dem Einschalten einer Set-Top-Box. Verläuft die Authentifizierung des Benutzers erfolgreich, sendet der Anbieter eine Authentifizierungsinformation an die Set-Top-Box. Diese Authentifizierungsinformation wird anschließend für die Registrierung bei einem Dienstanbieter bzw. mehreren Dienstanbietern verwendet. Die Anmelde- und Authentifizierungsfunktion wird nach dem Einschalten der Set-Top-Box aufgerufen und sofern die Authentifizierung erfolgreich ist, eine Authentifizierungsinformation an die Set-Top-Box gesendet. Diese Authentifizierungsinformation wird wiederum mittels der Set-Top-Box an einen Dienstanbieter gesendet und die Set-Top-Box auf diese Weise bei diesem Dienstanbieter registriert. Anschließend erfolgt ein Abgleich zwischen dem Dienstanbieter und dem Anbieter der Anmelde- und Authentifizierungsfunktion zwecks Verifikation der Authentifizierungsinformationen und ggf. die Übermittelung einer entsprechenden Bestätigung vom Anbieter der Authentifizierungsfunktion an den Dienstanbieter.

Die Druckschrift US 2008/0141296 A1 zeigt ein Verfahren zum Zugriff auf einen Authentifizierungsserver für ein digitales Mietfernsehsystem. Sobald das Fernsehgerät, das sowohl über eine Internetanbindung als auch einen digitalen TV-Empfänger verfügt, eingeschaltet wird, kontaktiert dieses einen Authentifizierungsserver, um zu bestimmen, ob der Benutzer ein Teilnehmer des Mitservice ist. Erst nach einer Freigabe durch den Serviceprovider mittels des Authentifizierungsservers kann der Benutzer auf das Digitalfernsehangebot zugreifen.

Ein weiteres Verfahren ist beispielsweise der Druckschrift US 2008 / 0127254 A1 zu entnehmen. Um festzustellen, ob der Benutzer eines Fernsehgerätes dem Fernsehgerät bekannt ist, d.h. ob Identifikationsdaten des Benutzers in dem Fernsehgerät vorhanden sind, werden Daten zur Identifikation des Benutzers von einer drahtlosen Kommunikationseinrichtung, die sich in Sichtweite des Fernsehgerätes befindet, zum Fernsehgerät übertragen. Dabei sind die zur Identifikation des Benutzers erforderlichen Daten bereits auf der Kommunikationseinrichtung vorhanden bzw. abgespeichert. Die empfangenen Daten werden in dem Fernsehgerät mit gespeicherten Nutzerprofilen abgeglichen, um das Fernsehgerät anschließend entsprechend zu steuern.

Das Verfahren weist den Nachteil auf, dass die für die Identifikation und Authentifizierung eines Benutzers erforderlichen Daten auf der drahtlosen Kommunikationseinrichtung gespeichert sind, so dass eine Authentifizierung des Benutzers immer nur mittels der zugehörigen Kommunikationseinrichtung erfolgen kann. Dies ist in der Handhabung umständlich und aufwendig. Wird die drahtlose Kommunikationsvorrichtung von Dritten verwendet, wird nicht der wahre Benutzer identifiziert und autorisiert, sondern derjenige Benutzer, dessen Identifikationsdaten auf der drahtlosen Kommunikationseinrichtung gespeichert sind.

Die Aufgabe der vorliegenden Erfindung besteht daher darin, ein sicheres Verfahren vorzuschlagen, das die Handhabung der Authentifizierung vereinfacht. Des Weiteren ist es Aufgabe der Erfindung, eine entsprechende Vorrichtung zur Durchführung des Verfahrens anzugeben.

Diese Aufgabe wird durch ein Verfahren mit den Merkmalen des Anspruchs 1 gelöst. Das erfindungsgemäße Verfahren bietet den Vorteil, dass die Authentifizierung von Benutzern eines Hybridendgerätes nicht Hardware gebunden erfolgt, sondern mittels eines dem jeweiligen Benutzer zugeordneten Registrierungscodes sowie einer persönlichen Identifikationsnummer. Ferner bietet das erfindungsgemäße Verfahren den Vorteil, dass seitens des Benutzers des Hybridendgerätes nur eine einmalige Anmeldung - im Folgenden als "Single-Sign-on" bezeichnet - erforderlich ist, um sich gegenüber einem der Dienstanbieter oder gegenüber mehreren der Dienstanbietern zu identifizieren. Nach erfolgreicher Authentifizierung des Benutzers kann dieser nicht nur auf die Nutzdaten bzw. Inhalte eines der Dienstanbieter zugreifen, sondern ist grundsätzlich auch für die Übermittelung von Nutzdaten bzw. den Zugriff auf Inhalte weiterer Dienstanbieter legitimiert.

Eine zweckmäßige Ausgestaltung der Erfindung ist dadurch gekennzeichnet, dass das Durchführen der Erstauthentifizierung umfasst: Eingeben des Registrierungscodes und der persönlichen Identifikationsnummer mittels des Hybridendgerätes, Übermitteln des Registrierungscodes und der persönlichen Identifikationsnummer an einen Authentifizierungsserver der Authentifizierungsvorrichtung über die Internetschnittstelle des Hybridendgerätes, Prüfen des Registrierungscodes und der persönlichen Identifikationsnummer in dem Authentifizierungsserver der Authentifizierungsvorrichtung durch Abgleich des Registrierungscodes und der persönlichen Identifikationsnummer mit den Benutzeridentifikationsdaten der Benutzer, die auf dem Speichermedium der Authentifizierungsvorrichtung gespeichert sind, und falls das Prüfen ergibt, dass der Registrierungscode und die persönliche Identifikationsnummer einem der Benutzer zuordenbar sind, Feststellen, dass dieser Benutzer zum Empfangen der Nutzdaten von dem Dienstanbieter und/oder zum Senden der Nutzdaten an den Dienstanbieter berechtigt ist. Greift der Benutzer erstmalig auf die Nutzdaten eines der Dienstanbieter zu, muss dieser sich zunächst mittels der Erstauthentifizierung für den Zugriff auf die Nutzdaten des Dienstanbieters legitimieren. Die Legitimation, ob der Benutzer zum Abruf der Nutzdaten von dem Dienstanbieter berechtigt ist, erfolgt durch Eingabe des Registrierungscodes und der persönlichen Identifikationsnummer. Die Erstauthentifizierung ist damit in Form einer Zwei-Faktor-Authentifizierung eingerichtet und stellt folglich ein besonders sicheres Verfahren zur Erstauthentifizierung des Benutzers dar.

Eine bevorzugte Weiterbildung der Erfindung zeichnet sich dadurch aus, dass das Durchführen der Authentifizierung umfasst: Übertragen der Profildatei, die auf dem Hybridendgerät abgelegt ist an den Authentifizierungsserver der Authentifizierungsvorrichtung über die Internetschnittstelle des Hybridendgerätes, Prüfen der Profildatei in dem Authentifizierungsserver der Authentifizierungsvorrichtung durch Abgleich der Profildatei mit den Benutzeridentifikationsdaten der Benutzer, die auf dem Speichermedium der Authentifizierungsvorrichtung gespeichert sind, und falls das Prüfen ergibt, dass die Profildatei einem der Benutzer zuordenbar ist, Feststellen, dass dieser Benutzer zum Empfangen der Nutzdaten von dem Dienstanbieter und/oder zum Senden der Nutzdaten an den Dienstanbieter berechtigt ist. Dies bietet den Vorteil, dass bei wiederholtem Zugriff des Benutzers auf einen der Dienstanbieter bzw. dessen Nutzdaten keine weitere Eingabe seitens des Benutzers zur Authentifizierung mehr erforderlich ist. Die Legitimation des Benutzers gegenüber dem Dienstanbieter erfolgt durch Übertragen und Prüfen der Profildatei. Dieser Vorgang spielt sich für den Benutzer während des Zugriffs auf die Nutzdaten des Dienstanbieters im Verborgenen ab. So ist es auch möglich auf die Nutzdaten anderer Dienstanbieter zuzugreifen, ohne jedes Mal den Benutzer dazu aufzufordern, sich aktiv zu authentifizieren.

Gemäß einer weiter bevorzugten Ausbildung der Erfindung umfasst das Durchführen der Authentifizierung: Eingeben der persönlichen Identifikationsnummer mittels des Hybridendgerätes, Übertragen der Profildatei, die auf dem Hybridendgerät abgelegt ist, und der persönlichen Identifikationsnummer an den Authentifizierungsserver der Authentifizierungsvorrichtung über die Internetschnittstelle des Hybridendgerätes, Prüfen der persönlichen Identifikationsnummer und der Profildatei in dem Authentifizierungsserver der Authentifizierungsvorrichtung durch Abgleich der persönlichen Identifikationsnummer und der Profildatei mit den Benutzeridentifikationsdaten der Benutzer, die auf dem Speichermedium der Authentifizierungsvorrichtung gespeichert sind, und falls das Prüfen ergibt, dass die persönliche Identifikationsnummer und die Profildatei einem der Benutzer zuordenbar ist, Feststellen, dass dieser Benutzer zum Empfangen der Nutzdaten von dem Dienstanbieter und/oder zum Senden der Nutzdaten an dem Dienstanbieter berechtigt ist. Die zusätzliche Eingabe der persönlichen Identifikationsnummer bietet den Vorteil einer erhöhten Sicherheit der Authentifizierung des Benutzers. Greift der Benutzer beispielsweise auf kostenpflichtige Inhalte zu oder auf Inhalte, die zur Kaufabwicklung dienen, wird der Benutzer einerseits durch die Aufforderung zur Eingabe der persönlichen Identifikationsnummer daraufhingewiesen, dass ihm im Folgenden möglicherweise weitere Kosten entstehen. Andererseits wird sichergestellt, dass der Benutzer nicht unbeabsichtigt auf diese speziellen Inhalte zugreift oder unbeabsichtigt Käufe durchführt. Eine weitere zweckmäßige Ausbildung der Erfindung ist dadurch gekennzeichnet, dass die Kommunikation zwischen dem internetfähigen Endgerät und der Authentifizierungsvorrichtung über eine sichere Internetnetverbindung mittels eines sicheren HypertextÜbetragungsprotokolls erfolgt. Auf diese Weise wird die Kommunikation zwischen dem internetfähigen Endgerät und der Authentifizierungsvorrichtung gegen unerwünschtes Abhören und Ausspionieren durch Dritte wirksam geschützt.

Gemäß einer weiteren bevorzugten Ausführungsform umfasst der Registrierungscode ausschließlich numerische Zeichen. So ist der Zeichenvorrat für die Eingabe des Registrierungscodes durch den Benutzer lediglich auf die Ziffern 0, 1, 2, 3, 4, 5, 6, 7, 8 und 9 beschränkt, so dass die Eingabe des Registrierungscodes aufgrund des beschränkten Zeichenvorrats wesentlich erleichtert wird. In einer besonders bevorzugten Ausführungsform erfolgt das Eingeben des Registrierungscodes und der persönlichen Identifikationsnummer mittels einer Fernbedienung des Hybridendgerätes. Der Registrierungscode und die persönlichen Identifikationsnummer können daher bequem über die Zifferntasten der Fernbedienung eingegeben werden.

Eine weitere zweckmäßige Ausgestaltung der Erfindung ist dadurch gekennzeichnet, dass die Nutzdaten zumindest im Wesentlichen Videodaten und/oder Audiodaten umfassen. Wie zuvor bereits beschrieben, umfassen die Nutzdaten darüber hinaus weitere Steuerdaten, nämlich neben den eigentlichen Audio- und Videodaten zusätzliche Daten, die eine Verknüpfung der übertragenen Audio- und Videodaten mit Inhalten des Internets gewährleisten. Gemäß einer weiteren Ausbildung umfassen die Nutzdaten Kommunikations- und Freigabedaten, die beispielsweise zur Kaufabwicklung dienen. Greift der Benutzer auf Inhalte von Dienstanbietern zu, die einen Onlineshop zum Kauf von Artikeln oder Dienstleistungen bereitstellen, erfolgt die Kaufabwicklung durch die Übermittelung entsprechender Kommunikations- und Freigabedaten über die Breitbandschnittstelle.

Die Aufgabe wird auch durch eine Vorrichtung mit den Merkmalen des Anspruchs 11 gelöst. Die sich daraus ergebenden Vorteile wurden bereits im Zusammenhang mit dem Verfahren beschreiben. Zur Vermeidung von Wiederholungen wird deshalb auf die entsprechenden Passagen der Beschreibung verwiesen.

Sowohl für das erfindungsgemäße Verfahren als auch für die erfindungsgemäße Vorrichtung kann es vorteilhaft sein, dass das Hybridendgerät als HbbTV-Hybridendgerät ("Hybrid Broadcast Broadband TV") ausgebildet, das in dem Entwurf zur technischen Spezifikation TS 102 796 V1.1.1 (2009-12) - im Folgenden kurz als HbbTV-Standard bezeichnet - des European Telecommunications Standards Institute 2009 näher definiert ist. Gemäß des HbbTV-Standards wird eine Plattform für die Signalisierung, den Transport und die Präsentation erweiterter und interaktiver Anwendungen zum Betrieb auf Hybridendgeräten festgelegt, die sowohl über eine Breitbandschnittstelle als auch über eine Internetschnittstelle verfügen. Bei derartigen Hybridendgeräten handelt es sich bevorzugt um Fernsehgeräte, Satellitenempfänger, Kabelfernsehempfänger, Settop-Boxen oder dergleichen. Das Hybridendgerät kommuniziert daher sowohl über die Internetschnittstelle als auch über die Breitbandschnittstelle. Ist das Hybridendgerät beispielsweise als erweitertes Fernsehgerät oder Set-Top-Box ausgebildet, empfängt das Hybridendgerät über die Breitbandschnittstelle neben den Nutzdaten in Form von Audio- und Videodaten zusätzliche Informationen, beispielsweise in Form einer eingebetteten Internetadresse, die eine Verknüpfung des Fernsehsignals mit Informationen und Mehrwertangeboten, die über das Internet abrufbar sind, erlauben. Mittels dieser zusätzlichen Informationen, ist es möglich, über die Interschnittstelle des Hybridendgerätes mit dem Internet zu kommunizieren und gezielt auf Inhalte im Internet zuzugreifen, die so mit den über die Breitbandschnittstelle übertragenen Nutzdaten verknüpft sind. Die Übertragung der Nutzdaten erfolgt bevorzugt unidirektional, beispielsweise ausgehend von einem Fernsehsender zu dem Hybridendgerät. Die Breitbandstelle ist daher bevorzugt als DVB-S-, DVB-S2-, DVB-T- bzw. DVB-C-Schnittstelle ausgebildet. Jedoch ist die Breitbandschnittstelle nicht ausschließlich auf den Empfang von Fernsehsignalen gemäß der vorgenannten DVB-Standards beschränkt, sondern grundsätzlich auch zum Empfang von Fernsehsignalen gemäß anderer üblicher Fernsehsignal-Übertragungsverfahren angepasst und eingerichtet.

Weitere bevorzugte oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Die Zeichnung zeigt:
- Fig. 1: schematisch den Ablauf eines ersten Registrierungsschritts,
- Fig. 2: schematisch das Durchführen einer Erstauthentifizierung,
- Fig. 3: schematisch das Durchführen einer Authentifizierung, und
- Fig. 4: eine Prinzipdarstellung der erfindungsgemäßen Vorrichtung.

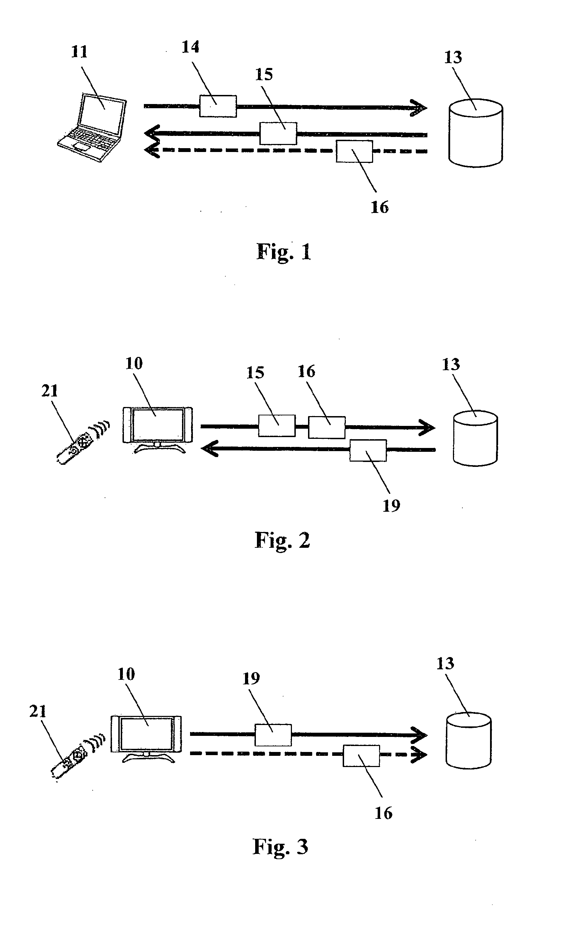

Figur 1 zeigt schematisch den Ablauf des ersten Registrierungsschritts. Ein Benutzer eines Hybridendgerätes 10 gibt zunächst seine Benutzeridentifikationsdaten 14 mittels eines internetfähigen Endgerätes 11 ein. Zur Eingabe der Benutzeridentifikationsdaten 14 ist jedes übliche internetfähige Endgerät geeignet, beispielsweise ein Laptop, ein Desktopcomputer, ein PDA, ein internetfähiges Mobiltelefon oder dergleichen. Die Eingabe der Benutzeridentifikationsdaten 14, bei denen es sich beispielsweise um personenbezogenen Daten wie Name, Anschrift, Bankverbindung bzw. Kreditkartendaten des Benutzers handelt, werden von dem internetfähigen Endgerät 11 über eine erste Internetverbindung 12 an einen Registrierungsserver einer Authentifizierungsvorrichtung 13 übermittelt. Um sicherzustellen, dass die erste Internetverbindung 12 abhörsicher und gegen Eingriffe von Außen gesichert ist, erfolgt die Kommunikation zwischen dem internetfähigen Endgerät 11 und der Authentifizierungsvorrichtung 13 vorteilhafter Weise über eine gesicherte Internetverbindung mittels eines sicheren Hypertext-Übertragungsprotokolls (HTTPS-Protokoll). Alternativ kann die Kommunikation zwischen dem internetfähigen Endgerät 11 und der Authentifizierungsvorrichtung 13 auch ungesichert oder aber mittels anderer Verschlüsselungsverfahren erfolgen.

Ferner wird der Benutzer zur Eingabe einer persönlichen Identifikationsnummer 16 aufgefordert. Die persönliche Identifikationsnummer 16 ist von dem Benutzer frei wählbar, d.h. der Benutzer kann die persönliche Identifikationsnummer 16 nach seinem Belieben festlegen. Das Eingeben der persönlichen Identifikationsnummer 16 erfolgt ebenfalls mittels des internetfähigen Endgerätes 11. Hierbei hat der Benutzer die Wahl, ob er die persönliche Identifikationsnummer 16 selbst wählen möchte. Folgt der Benutzer der Aufforderung zum Eingeben der persönlichen Identifikationsnummer 16, wird die persönliche Identifikationsnummer 16 nach dem Eingeben von dem internetfähigen Endgerät 11 an den Registrierungsserver der Authentifizierungsvorrichtung 13 über die erste Internetverbindung übermittelt. Folgt der Benutzer der Aufforderung zum Eingeben der persönlichen Identifikationsnummer 16 hingegen nicht, wird die persönliche Identifikationsnummer 16 in einem weiter unten beschriebenen Schritt generiert. Anders ausgedrückt, wird in dem Fall, dass der Benutzer die persönliche Identifikationsnummer 16 selbst festlegt und mittels des internetfähigen Endgerätes 11 eingibt, die persönliche Identifikationsnummer 16 ebenso wie die Benutzeridentifikationsdaten 14 von dem internetfähigen Endgerät 11 über eine erste Internetverbindung 12 an den Registrierungsserver der Authentifizierungsvorrichtung 13 übermittelt. Gibt der Benutzer keine persönliche Identifikationsnummer 16 ein, erfolgt nur die Übermittelung der Benutzeridentifikationsdaten 14. Die persönliche Identifikationsnummer 16 wird in der Authentifizierungsvorrichtung 13 erst anschließend generiert.

Die Benutzeridentifikationsdaten 14 werden anschließend validiert, indem die Benutzeridentifikationsdaten 14 mit einem vorgegebenen Benutzerreferenzdatensatz verglichen werden. Der Benutzerreferenzdatensatz umfasst Informationen, die zur Überprüfung der Identität des Benutzers anhand der auf dem Registrierungsserver vorliegenden Benutzeridentifikationsdaten 14 geeignet sind. Mit anderen Worten ist der Benutzerreferenzdatensatz an die zu überprüfenden Benutzeridentifikationsdaten 14 angepasst. Beispielsweise umfasst dieser zur Überprüfung von Kontodaten Informationen zur Kreditwürdigkeit des Benutzers bzw. zur Überprüfung der Kreditkartendaten entsprechende Kontrolldaten, die zur Feststellung, ob die vorliegenden Benutzeridentifikationsdaten 14 einer gültigen Kreditkarte entsprechen erforderlich sind. Selbstverständlich kann der Benutzerreferenzdatensatz auch der Altersverifikation oder schlicht der Feststellung der tatsächlichen Identität des Benutzers dienen.

In dem Fall, dass die Benutzeridentifikationsdaten 14 einem der vorgegebenen Benutzerreferenzdatensätzen entsprechen, werden die Benutzeridentifikationsdaten 14 des Benutzers auf einem Speichermedium der Authentifizierungsvorrichtung 13 gespeichert. Die Benutzeridentifikationsdaten 14 sind damit dauerhaft gesichert und jederzeit in der Authentifizierungsvorrichtung 13 abrufbar. Als Speichermedium finden sämtliche üblichen bekannten Speichertechnologien Anwendung.

Falls der Benutzer zuvor keine persönliche Identifikationsnummer 16 eingegeben hat, erfolgt anschließend die Generierung eines Registrierungscodes 15 und der persönlichen Identifikationsnummer 16. Hat der Benutzer bereits zuvor die persönliche Identifikationsnummer 16 festgelegt und eingegeben, erfolgt nur die Generierung des Registrierungscodes 15.

Anhand des Registrierungscodes 15 und der persönlichen Identifikationsnummer 16 ist der Benutzer eindeutig identifizierbar, d.h. der Registrierungscode 15 und/oder die persönliche Identifikationsnummer 16 sind dem Benutzer zugeordnet. Vorzugsweise umfasst der Registrierungscode 15 einen 16-stelligen numerischen Hash-Wert, der auf Basis der Benutzeridentifikationsdaten 14 erzeugt wird. Die Erzeugung des Hash-Werts erlaubt die spätere Durchführung eines Plausibilitätschecks, um die Korrektheit des Registrierungscodes 15 überprüfen zu können. Selbstverständlich ist der Registrierungscode 15 nicht ausschließlich auf 16-stellige numerische Hash-Werte beschränkt, sondern kann jede beliebige Registrierungscodelänge aufweisen.

Der Registrierungscode 15 wird anschließend von dem Registrierungsserver der Authentifizierungsvorrichtung 13 zu dem internetfähigen Endgerät 11 über die erste Internetverbindung 12 übermittelt. Der Benutzer kann sich den Registrierungscode 15 auf dem internetfähigen Endgerät 11 ausgeben bzw. anzeigen lassen und für die spätere Verwendung ggf. notieren.

Falls das Eingeben der persönlichen Identifikationsnummer 16 durch den Benutzer nicht erfolgt ist, also die persönliche Identifikationsnummer 16 in der Authentifizierungsvorrichtung 13 generiert wurde, erfolgt die Übermittelung der persönlichen Identifikationsnummer 16 von dem Registrierungsserver an den Benutzer oder an das internetfähige Endgerät 11 auf separatem Weg. Beispielsweise wird dem Benutzer die persönliche Identifikationsnummer 16 per Email oder SMS übermittelt. Auch ist es möglich die persönliche Identifikationsnummer 16 nicht elektronisch, sondern auf dem Postweg zu übermitteln. In jedem Fall erfolgt die Übermittelung der persönlichen Identifikationsnummer 16 nicht innerhalb einer Nachricht_über die erste Internetverbindung 12. Folglich ist es auch möglich, sowohl die persönliche Identifikationsnummer 16 als auch den Registrierungscode 15 ausschließlich über die erste Internetverbindung 12 zu übermitteln. Ein derartige Übermittelung erfolgt jedoch zeitlich derart versetzt, dass beim Abhören der ersten Internetverbindung 12 ein unberechtigter Dritter zugleich weder Kenntnis von dem Registrierungscode 15 als auch der persönlichen Identifikationsnummer 16 erhält. So wird vermieden, dass unberechtigte Dritte weder Kenntnis von dem Registrierungscode 15 noch von der persönlichen Identifikationsnummer 16 erhalten. Damit ist ein Missbrauch durch unberechtigte Dritte weitestgehend ausgeschlossen.

Sobald der Benutzer auf einen Dienstanbieter 17, 18 zugreifen möchte, der Benutzer also Nutzdaten von einem Dienstanbieter 17, 18 beziehen will oder Dienste eines Dienstanbieters 17, 18 in Anspruch nehmen möchte, wird zunächst festgestellt, ob der Benutzer zum Zugriff auf den Dienstanbieter 17, 18 berechtigt ist. Diese Überprüfung erfolgt in dem weiter unten beschriebenen Authentifizierungsschritt.

Dazu wird überprüft, ob eine dem Benutzer zugeordnete Profildatei 19 auf dem Hybridendgerät 10 vorhanden ist, wobei das Hybridendgerät 10 über die Internetschnittstelle mit einem Applikationsserver der Authentifizierungsvorrichtung 13 kommuniziert. Versucht der Benutzer auf einen Dienstanbieter 17, 18 zuzugreifen, beginnt der Applikationsserver mit der Prüfung, ob eine dem Benutzer zugeordnete Profildatei 19 auf dem Hybridendgerät vorhanden ist. So wird festgestellt, ob der Benutzer bereits früher auf einen authentisierungspflichtigen Dienstanbieter 17, 18 zugegriffen hat. Die Profildatei 19 ist als Cookie oder als Client-Server-Zertifikat ausgebildet, so dass anhand der Profildatei 19 der Benutzer eindeutig identifizierbar ist.

In dem Fall, dass auf dem Hybridendgerät 10 die dem Benutzer zugeordnete Profildatei 19 vorhanden ist, erfolgt die Durchführung einer Authentifizierung, um festzustellen, ob der Benutzer zum Empfangen von Nutzdaten von dem Dienstanbieter 17, 18 berechtigt ist. Die Berechtigung des Benutzers setzt voraus, dass sich dieser in dem Registrierungsschritt identifiziert und dem Benutzer ein zur eindeutigen Identifikation generierter Registrierungscode 15 sowie eine persönliche Identifikationsnummer 16 zugeordnet worden ist. Ist auf dem Hybridendgerät 10 keine dem Benutzer zugeordnete Profildatei 19 vorhanden, erfolgt die Durchführung der Erstauthentifizierung, um festzustellen, ob der Benutzer zum Empfangen der Nutzdaten von dem Dienstanbieter 17, 18 und/oder zum Senden der Nutzdaten an den Dienstanbieter 17, 18 berechtigt ist. Ergibt die Erstauthentifizierung, dass der Benutzer berechtigt ist, d.h. zum Empfangen der Nutzdaten von dem Dienstanbieter 17, 18 und/oder zum Senden der Nutzdaten an den Dienstanbieter legitimiert ist, wird die dem Benutzer zugeordnete Profildatei 19 generiert. Die Profildatei 19 wird von dem Authentifizierungsserver der Authentifizierungsvorrichtung 13 auf das Hybridendgerät 10 übertragen und auf dem Hybridendgerät 10 ablegt, d.h. dauerhaft auf dem Hybridendgerät 10 gespeichert. Die Profildatei 19 bleibt auch über einen Neustart des Hybridendgerätes 10 und über längere stromlose Phasen erhalten. Anders ausgedrückt wird durch das Vorhandensein bzw. das Nichtvorhandensein der Profildatei 19 auf dem Hybridendgerät 10 erkannt, ob der Benutzer als ein berechtigter Benutzer bereits vormals auf einen.Dienstanbieter 17, 18 zugegriffen hat oder ob es sich um den ersten Zugriff auf einen der Dienstanbieter 17, 18 handelt.

Nach durchgeführter Authentifizierung bzw. Erstauthentifizierung und Feststellung, dass es sich bei dem Benutzer um einen berechtigten Benutzer handelt, wird eine Freigabenachricht an einen oder mehrere Dienstanbieter 17, 18 übertragen. Mittels der Freigabenachricht wird dem Dienstanbieter 17, 18 signalisiert, dass der Benutzer sich als berechtigter Benutzer für den Zugriff auf die Dienste des Dienstanbieters 17, 18 authentifiziert hat. Die Freigabenachricht wird dabei über die zweite Internetverbindung 20 von der Authentifizierungsvorrichtung 13 an die Dienstanbieter 17, 18 übertragen. Im Gegenzug werden die Nutzdaten von dem Dienstanbieter 17, 18 über die Breitbandschnittstelle an das Hybridendgerät 10 übermittelt. Die Übermittelung von Nutzdaten ist dabei nicht nur auf eine Übermittlung von Nutzdaten von dem Dienstanbieter 17, 18 zu dem Hybridgerät 10 beschränkt. Alternativ umfasst das Übermitteln auch die Übertragung von Daten bzw. Nutzdaten von dem Hybridendgerät 10 an den Dienstanbieter 17, 18. Dies ist beispielsweise der Fall, wenn der Benutzer über den Dienstanbieter 17, 18 kostenpflichtige Dienste in Anspruch nimmt, z.B. beim Erwerb von Waren über den Dienstanbieter 17, 18.

Eine bevorzugte Weiterbildung der Erfindung ist in Fig. 2 gezeigt, die das Durchführen der Erstauthentifizierung schematisch darstellt. Zur Erstauthentifizierung wird der Benutzer aufgefordert, den Registrierungscode 15 und die persönliche Identifikationsnummer 16 mittels des Hybridendgerätes 10 einzugeben. Der Registrierungscode 15 sowie die persönliche Identifikationsnummer 16 werden über die Internetschnittstelle des Hybridendgerätes 10 an einen Authentifizierungsserver der Authentifizierungsvorrichtung 13 übermittelt. Der Authentifizierungsserver überprüft den Registrierungscode 15 in Verbindung mit der persönlichen Identifikationsnummer 16 daraufhin, ob der Registrierungscode 15 und die persönliche Identifikationsnummer 16 einem der Benutzer zuordenbar ist. Dies geschieht durch Abgleich des Registrierungscodes 15 und der persönlichen Identifikationsnummer 16 mit den Benutzeridentifikationsdaten 14, die auf dem Speichermedium der Authentifizierungsvorrichtung 13 gespeichert sind. Ergibt der Abgleich, dass der Registrierungscode 15 und die persönliche Identifikationsnummer 16 einem der Benutzer zuordenbar ist, wird festgestellt, dass dieser Benutzer zum Empfangen der Nutzdaten von dem Dienstanbieter 17, 18 und/oder zum Senden der Nutzdaten an den Dienstanbieter 17, 18 berechtigt ist. Anschließend wird die dem Benutzer zugeordnete Profildatei 19 von dem Authentifizierungsserver der Authentifizierungsvorrichtung 13 über die Internetschnittstelle auf das Hybridendgerät 10 übertragen und auf dem Hybridendgerät 10 abgelegt.

Gemäß einer weiter bevorzugten Ausführungsform der Erfindung, entsprechend der schematisch dargestellten Durchführung einer Authentifizierung in Fig. 3, wird, sofern ein Benutzer auf einen Dienstanbieter 17, 18 zugreifen möchte, die auf dem Hybridendgerät 10 abgelegte Profildatei 19 an den Authentifizierungsserver der Authentifizierungsvorrichtung 13 über die Internetschnittstelle des Hybridendgerätes 10 übertragen. Die Profildatei 19 wird in dem Authentifizierungsserver der Authentifizierungsvorrichtung 13 durch Abgleich der Profildatei 19 mit den Benutzeridentifikationsdaten 14 abgeglichen. Die Benutzeridentifikationsdaten 14 sind auf dem Speichermedium der Authentifizierungsvorrichtung 13 gespeichert. Ergibt der Abgleich bzw. die Prüfung, dass die Profildatei 19 einem der Benutzer zuordenbar ist, ist dieser Benutzer als berechtigter Benutzer erkannt und es wird festgestellt, dass dieser Benutzer zum Empfangen der Nutzdaten von dem Dienstanbieter 17, 18 und/oder zum Senden der Nutzdaten an den Dienstanbieter berechtigt ist. Mit anderen Worten wird der Benutzer aufgrund des Vorhandenseins der Profildatei 19 auf dem Hybridendgerät 10 eindeutig identifiziert und als Berechtiger bzw. autorisierter Benutzer erkannt. Damit ist der Benutzer nach einem einmaligen Zugriff auf einen Dienstanbieter 17, 18 einschließlich erfolgter Authentifizierung über das Vorhandensein der Profildatei 19 eindeutig identifizierbar. Dies bietet den Vorteil, dass der Benutzer für alle Dienstanbieter 17, 18, für den die Profildatei den Benutzer als berechtigten Benutzer ausweist, authentifiziert ist. Greift der Benutzer auf einen weiteren Dienstanbieter 17, 18 zu, um von diesem Nutzdaten zu empfangen oder an diesen Nutzdaten zu senden, erfolgt die Prüfung, ob der Benutzer für diesen Zugriff auf den Dienstanbieter 17, 18 berechtigt ist, über das Vorhandensein der Profildatei 19 auf dem Hybridendgerät 10. Mit anderen Worten genügt die einmalige Authentifizierung durch Eingeben des Registrierungscodes 15 und der persönlichen Identifikationsnummer 16, um sich bei einer Vielzahl von Dienstanbietern 17, 18 als berechtigter Benutzer zu authentifizieren, ohne bei jedem Zugriff auf einen anderen Dienstanbieter 17, 18 erneut den Registrierungscode 15 und die persönliche Identifikationsnummer 16 eingeben zu müssen.

Gemäß einer weiter bevorzugten Ausführungsform der Erfindung erfolgt neben der Übermittelung der Profildatei 19 zusätzlich die Eingabe und die anschließende Übermittelung der persönlichen Identifikationsnummer 16. Sollen Nutzdaten von einem der Dienstanbieter 17, 18 empfangen oder an diesen gesendet werden, die eine besondere Sorgfalt hinsichtlich der Identifizierung und Authentifizierung des Benutzer erfordern, beispielsweise beim Zugriff auf weitere kostenpflichtige Inhalte oder den Onlineabschluss von Kaufverträgen, wird der Benutzer aufgefordert, seine persönliche Identifikationsnummer 16 einzugeben. Sowohl die Profildatei 19 als auch die persönliche Identifikationsnummer 16 werden über die Internetschnittstelle des Hybridendgerätes 10 an den Authentifizierungsserver der Authentifizierungsvorrichtung 13 übertragen. Ergibt die Prüfung der persönlichen Identifikationsnummer 16 und der Profildatei 19, dass diese einem der Benutzer zuordenbar ist, erfolgt die Feststellung, dass dieser Benutzer zum Empfangen der Nutzdaten von dem Dienstanbieter 17,18 und/oder zum Senden der Nutzdaten an den Dienstanbieter berechtigt ist. Die Berechtigung des Benutzers wird durch Abgleich der persönlichen Identifikationsnummer 16 und der Profildatei 19 mit den entsprechenden Benutzeridentifikationsdaten 14, die auf dem Speichermedium der Authentifizierungsvorrichtung gespeichert sind, geprüft.

Vorzugsweise ist die persönliche Identifikationsnummer 16 von dem Benutzer frei wählbar und umfasst üblicher Weise vier numerische Zeichen. Auf diese Weise ist die Authentifizierung für den Benutzer besonders komfortabel, da nur vier numerische Zeichen einzugeben sind. Alternativ weist die persönliche Identifikationsnummer mehr als vier Zeichen auf und umfasst ferner auch beliebige nicht numerische Zeichen.

Eine weitere Ausführungsform zeichnet sich dadurch aus, dass das Eingeben des Registrierungscodes 15 und der persönlichen Identifikationsnummer 16 mittels einer Fernbedienung 21 des Hybridgerätes erfolgt. Der Benutzer kann auf diese Weise sehr komfortabel mit der sowieso zur Bedienung des Hybridendgerätes 10 erforderlichen Fernbedienung 21 den Registrierungscode 15 sowie die persönliche Identifikationsnummer 16 eingeben.

Gemäß einer weiteren bevorzugten Ausführungsform umfassen die Nutzdaten zumindest im Wesentlichen Videodaten und/oder Audiodaten. Typischerweise umfassen die Nutzdaten digitale Fernsehdaten. Die Nutzdaten sind aber nicht ausschließlich auf Femsehdaten beschränkt, sondern umfassen jegliche Form von Audio- und Videodaten. Ferner umfassen die Nutzdaten Steuerdaten, die für die korrekte Übertragung der Audio- und Videodaten üblicherweise mit übertragen werden.

Zur Verknüpfung der Audio- und Videodaten, d.h. der von den Dienstanbietern 17, 18 übermittelte Inhalte, umfassen die Nutzdaten ferner eingebettete Internetadressen. Damit findet eine Synchronisation zwischen den Nutzdaten, beispielsweise einem laufenden Fernsehprogramm, und gewöhnlichen HTML-Internetseiten statt. Die Nutzdaten umfassen daher Triggerinformationen sowie Internetadressen, die von dem Hybridendgerät 10 ausgewertet werden. Dies erlaubt es dem Benutzer, auf entsprechende Inhalte im Internet zuzugreifen, die den Nutzdaten zeitlich und inhaltlich zugeordnet sind. Auf diese Weise können die Dienstanbieter interaktive Anwendungen und Informationen anbieten, auf die der Benutzer interaktiv zugreifen kann. Entsprechend einer alternativen Ausführungsform umfassen die Nutzdaten Kommunikations- und Freigabedaten, die zur Abwickelung von Onlinegeschäften zwischen dem Benutzer und dem Dienstanbieter 17, 18 über die Breitbandschnittstelle erforderlich sind.

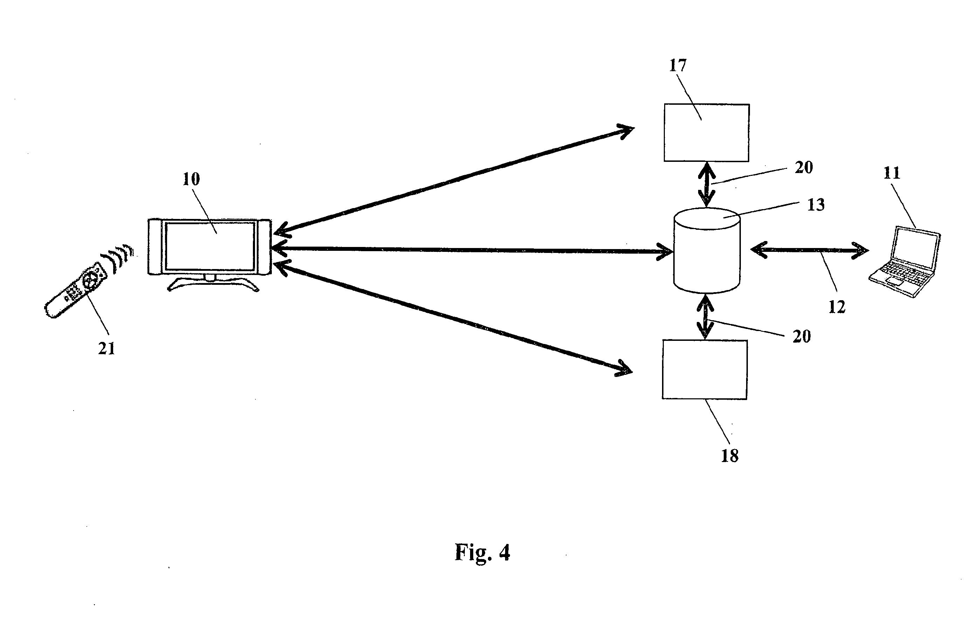

Fig. 4 zeigt eine Prinzipdarstellung der erfindungsgemäßen Vorrichtung. Die Vorrichtung umfasst das Hybridendgerät 10 mit zumindest einer Internetschnittstelle und zumindest einer Breitbandschnittstelle, die Authentifizierungsvorrichtung 13, wobei die Authentifizierungsvorrichtung 13 den Registrierungsserver, den Applikationsserver, den Authentifizierungsserver und zumindest ein Speichermedium umfasst. Alternativ sind der Registrierungs-, Applikationsserver und der Authentifizierungsserver auf einem Server implementiert. Das Hybridendgerät 10 ist über die Internetschnittstelle mit der Authentifizierungsvorrichtung 13 verbunden und über die Breitbandschnittstelle mit zumindest einem Dienstanbieter 17, 18 verbunden. Die Authentifizierungsvorrichtung 13 ist über die zweite Internetverbindung mit zumindest einem der Dienstanbieter 17, 18 verbunden und derart ausgebildet, dass beispielsweise die Freigabenachricht von der Authentifizierungsvorrichtung 13 an den Dienstanbieter 17, 18 übertragen werden kann.

Ferner ist das internetfähige Endgerät 11 über die erste Internetverbindung 12 mit dem Registrierungsserver der Authentifizierungsvorrichtung 13 verbunden. Der Registrierungsserver ist dabei angepasst, Benutzeridentifkationsdaten, die vom internetfähigen Endgerät 11 an den Registrierungsserver über die erste Internetverbindung 12 übermittelt werden, durch Vergleich von Benutzeridentifikationsdaten 14 mit einem vorgegebenen Benutzerreferenzdatensatz zu validieren und in dem Fall, dass die Benutzeridentifikationsdaten 14 dem vorgegebenen Benutzerreferenzdatensatz entsprechen, die Benutzeridentifikationsdaten 14 des Benutzers auf dem Speichermedium zu speichern.

Weiter ist der Registrierungsserver angepasst, den Registrierungscode 15 und die persönlichen Identifikationsnummer 16 zu generieren, wobei der Registrierungscode 15 und/oder die persönliche Identifikationsnummer 16 dem Benutzer zugeordnet ist, den Registrierungscode 15 von dem Registrierungsserver der Authentifizierungsvorrichtung 13 zu dem internetfähigen Endgerät 11 über die erste Internetverbindung 12 zu übermitteln und die persönlichen Identifikationsnummer 16 von dem Registrierungsserver über eine separate Verbindung an den Benutzer oder an das internetfähige Endgerät 11 zu übermitteln. Alternativ ist der Registrierungsserver angepasst, den Registrierungscode 15 zu generieren, wobei der Registrierungscode 15 dem Benutzer zugeordnet ist und den Registrierungscode 15 von dem Registrierungsserver der Authentifizierungsvorrichtung 13 zu dem internetfähigen Endgerät 11 über die erste Internetverbindung 12 zu übermitteln. In diesem Fall erfolgt keiner Übermittelung der persönlichen Identifikationsnummer 16 von dem Registrierungsserver an den Benutzer oder an das internetfähige Endgerät 11. Dieser Fall tritt dann ein, wenn der Benutzer zuvor die persönliche Identifikationsnummer 16 selbst festgelegt hat.

Der Registrierungsserver ist ferner derart eingerichtet und angepasst, zu prüfen, ob die dem Benutzer zugeordnete Profildatei 19 auf dem Hybridendgerät 10 vorhanden ist, wobei das Hybridendgerät 10 eingerichtet ist, über die Internetschnittstelle mit dem Applikationsserver der Authentifizierungsvorrichtung 13 zu kommunizieren und im dem Fall, dass auf dem Hybridendgerät 10 die dem Benutzer zugeordnete Profildatei 19 vorhanden ist, die Authentifizierung durchzuführen, um festzustellen, ob der Benutzer zum Empfangen von Nutzdaten von dem Dienstanbieter 17, 18 berechtigt ist, andernfalls die Erstauthentifizierung durchzuführen, um festzustellen, ob der Benutzer zum Empfangen der Nutzdaten von dem Dienstanbieter 17, 18 und/oder zum Senden der Nutzdaten an den Dienstanbieter 17, 18 berechtigt ist, die Profildatei 19 zu generieren, wobei die Profildatei 19 dem Benutzer zugeordnet ist, die Profildatei 19 von dem Authentifizierungsserver der Authentifizierungsvorrichtung 13 über die Internetschnittstelle auf das Hybridendgerät 10 zu übertragen, wobei die Profildatei 19 auf dem Hybridendgerät 10 abgelegt wird, sowie nach der Erstauthentifizierung oder der Authentifizierung, sofern der Benutzer als ein berechtigter Benutzer authentifiziert wurde, einer Freigabenachricht an zumindest einen der Dienstanbieter 17, 18 zu übertragen und die Nutzdaten von dem Dienstanbieter 17, 18 zu übermitteln, an den die Übertragung der Freigabenachricht erfolgt ist, wobei das Hybridendgerät 10 angepasst ist, zur Übermittelung der Nutzdaten über die Breitbandschnittstelle mit dem Dienstanbieter zu kommunizieren.

## Patentansprüche

1. Verfahren zur Authentifizierung von Benutzern eines Hybridendgerätes (**10**),
wobei das Hybridendgerät (**10**) über zumindest eine Internetschnittstelle kommuniziert und über zumindest eine Breitbandschnittstelle mit zumindest einem Dienstanbieter (**17, 18**) kommuniziert,
mit zumindest einem ersten Registrierungsschritt umfassend,
Eingeben von Benutzeridentifikationsdaten (**14**) zumindest eines der Benutzer mittels eines internetfähigen Endgerätes (**11**),
Auffordern des Benutzers zum Eingeben einer persönlichen Identifikationsnummer (**16**) mittels des internetfähigen Endgerätes (**11**), wobei die persönliche Identifikationsnummer (**16**) von dem Benutzer frei wählbar ist,
und falls das Eingeben der persönlichen Identifikationsnummer (**16**) durch den Benutzer erfolgt ist, Übermitteln der persönlichen Identifikationsnummer (**16**) von dem internetfähigen Endgerät (**11**) an einen Registrierungsserver einer Authentifizierungsvorrichtung (**13**) über eine erste Internetverbindung (**12**),
Übermitteln der Benutzeridentifikationsdaten (**14**) des Benutzers von dem internetfähigen Endgerät (**11**) an den Registrierungsserver der Authentifizierungsvorrichtung (**13**) über die erste Internetverbindung (**12**),
Validieren der Benutzeridentifikationsdaten (**14**), die auf dem Registrierungsserver vorliegen, durch Vergleichen der Benutzeridentifikationsdaten (**14**) mit einem vorgegebenen Benutzerreferenzdatensatz und in dem Fall, dass die Benutzeridentifikationsdaten dem vorgegebenen Benutzerreferenzdatensatz entsprechen,
Speichern der Benutzeridentifikationsdaten (**14**) des Benutzers auf einem Speichermedium der Authentifizierungsvorrichtung (**13**),
Generieren von zumindest einem Registrierungscode (**15**), wobei der Registrierungscode (**15**) dem Benutzer zugeordnet ist,
und falls das Eingeben der persönlichen Identifikationsnummer (**16**) durch den Benutzer nicht erfolgt ist, Generieren von zumindest der persönlichen Identifikationsnummer (**16**), wobei die persönliche Identifikationsnummer (**16**) dem Benutzer zugeordnet ist,
Übermitteln des Registrierungscodes (**15**) von dem Registrierungsserver der Authentifizierungsvorrichtung (**13**) zu dem internetfähigen Endgerät (**11**) über die erste Internetverbindung (**12**) und
falls das Eingeben der persönlichen Identifikationsnummer (**16**) durch den Benutzer nicht erfolgt ist, Übermitteln der persönlichen Identifikationsnummer (**16**) von dem Registrierungsserver über eine separate Verbindung an den Benutzer oder an das internetfähige Endgerät (**11**),
und einen Authentifizierungsschritt umfassend,
Prüfen, ob eine dem Benutzer zugeordnete Profildatei (**19**) auf dem Hybridendgerät (**10**) vorhanden ist, wobei das Hybridendgerät (**10**) über die Internetschnittstelle mit einem Applikationsserver der Authentifizierungsvorrichtung (**13**) kommuniziert und
im dem Fall, dass auf dem Hybridendgerät (**10**) die dem Benutzer zugeordnete Profildatei (**19**) vorhanden ist,
a) Durchführen einer Authentifizierung um festzustellen, ob der Benutzer zum Empfangen von Nutzdaten von dem Dienstanbieter (**17, 18**) und/oder zum Senden von Nutzdaten an den Dienstanbieter (**17, 18**) berechtigt ist,
andernfalls
b) Durchführen einer Erstauthentifizierung, um festzustellen, ob der Benutzer zum Empfangen der Nutzdaten von dem Dienstanbieter (**17, 18**) und/oder zum Senden der Nutzdaten an den Dienstanbieter (**17,18**) berechtigt ist,
und falls die Erstauthentifizierung ergibt, dass der Benutzer berechtigt ist,
Generieren der Profildatei (**19**), wobei die Profildatei (**19**) dem Benutzer zugeordnet ist,
Übertragen der Profildatei (**19**) von dem Authentifizierungsserver der Authentifizierungsvorrichtung (**13**) über die Internetschnittstelle auf das Hybridendgerät (**10**), wobei die Profildatei (**19**) auf dem Hybridendgerät (**10**) abgelegt wird,
sowie nach Durchführen der Erstauthentifizierung oder Durchrühren der Authentifizierung, sofern der Benutzer als ein berechtigter Benutzer authentifiziert wurde,
Übertragen einer Freigabenachricht an zumindest einen der Dienstanbieter (**17, 18**) und
Übermitteln der Nutzdaten von dem Dienstanbieter (**17, 18**), an den die Übertragung der Freigabenachricht erfolgt ist, wobei das Hybridendgerät (**10**) zum Übermitteln der Nutzdaten über die Breitbandschnittstelle mit dem Dienstanbieter (**17, 18**) kommuniziert, wobei
das Durchführen der Erstauthentifizierung umfasst:
Eingeben des Registrierungscodes (**15**) und der persönlichen Identifikationsnummer (**16**) mittels des Hybridendgerätes (**10**),
Übermitteln des Registrierungscodes (**15**) und der persönlichen Identifikationsnummer (**16**) an einen Authentifizierungsserver der Authentifizierungsvorrichtung (**13**) über die Internetschnittstelle des Hybridendgerätes (**10**),
Prüfen des Registrierungscodes (**15**) und der persönlichen Identifikationsnummer (**16**) in dem Authentifizierungsserver der Authentifizierungsvorrichtung (**13**) durch Abgleich des Registrierungscodes (**15**) und der persönlichen Identifikationsnummer (**16**) mit den Benutzeridentifikationsdaten (**14**) der Benutzer, die auf dem Speichermedium der Authentifizierungsvorrichtung (**13**) gespeichert sind, und falls das Prüfen ergibt, dass der Registrierungscode (**15**) und
die persönliche Identifikationsnummer (**16**) einem der Benutzer zuordenbar sind,
Feststellen, dass dieser Benutzer zum Empfangen der Nutzdaten von dem Dienstanbieter (**17, 18**) und/oder zum Senden der Nutzdaten an den Dienstanbieter (**17, 18**) berechtigt ist.

2. Verfahren nach Anspruch 1, **dadurch gekennzeichnet, dass** das Durchführen der Authentifizierung umfasst:
Übertragen der Profildatei (**19**), die auf dem Hybridendgerät (**10**) abgelegt ist, an den Authentifizierungsserver der Authentifizierungsvorrichtung (**13**) über die Internetschnittstelle des Hybridendgerätes (**10**),
Prüfen der Profildatei (**19**) in dem Authentifizierungsserver der Authentifizierungsvorrichtung (**13**) durch Abgleich der Profildatei (**19**) mit den Benutzeridentifikationsdaten (**14**) der Benutzer, die auf dem Speichermedium der Authentifizierungsvorrichtung (**13**) gespeichert sind, und falls das Prüfen ergibt, dass die Profildatei (**19**) einem der Benutzer zuordenbar ist,
Feststellen, dass dieser Benutzer zum Empfangen der Nutzdaten von dem Dienstanbieter (**17, 18**) und/oder zum Senden der Nutzdaten an den Dienstanbieter (**17, 18**) berechtigt ist.

3. Verfahren nach Anspruch 1, **dadurch gekennzeichnet, dass** das Durchführen der Authentifizierung umfasst:
Eingeben der persönlichen Identifikationsnummer (**16**) mittels des Hybridendgerätes,
Übertragen der Profildatei (**19**), die auf dem Hybridendgerät (**10**) abgelegt ist, und der persönlichen Identifikationsnummer (**19**) an den Authentifizierungsserver der Authentifizierungsvorrichtung (**13**) über die Internetschnittstelle des Hybridendgerätes (**10**),
Prüfen der persönlichen Identifikationsnummer (**16**) und der Profildatei (**19**) in dem Authentifizierungsserver der Authentifizierungsvorrichtung (**13**) durch Abgleich der persönlichen Identifikationsnummer (**16**) und der Profildatei (**19**) mit den Benutzeridentifikationsdaten (**14**) der Benutzer, die auf dem Speichermedium der Authentifizierungsvorrichtung (**13**) gespeichert sind, und falls das Prüfen ergibt, dass die persönliche Identifikationsnummer (**16**) und die Profildatei (**19**) einem der Benutzer zuordenbar ist,
Feststellen, dass dieser Benutzer zum Empfangen der Nutzdaten von dem Dienstanbieter (**17, 18**) und/oder zum Senden der Nutzdaten an den Dienstanbieter (**17, 18**) berechtigt ist.

4. Verfahren nach einem der Ansprüche 1 bis 3, **dadurch gekennzeichnet, dass** das Hybridendgerät (**10**) über die Internetschnittstelle und über die Breitbandschnittstelle gemäß des HbbTV-Standards kommuniziert, indem das Hybridendgerät (**10**) als HbbTV-Endgerät ausgebildet ist.

5. Verfahren nach einem der Ansprüche 1 bis 4, **dadurch gekennzeichnet, dass** die Kommunikation zwischen dem internetfähigen Endgerät (**11**) und der Authentifizierungsvorrichtung (**13**) über eine sichere Internetnetverbindung mittels eines sicheren Hypertext-Übertragungsprotokolls erfolgt.

6. Verfahren nach einem der Ansprüche 1 bis 5, **dadurch gekennzeichnet, dass** der Registrierungscode (**15**) ausschließlich numerischen Zeichen umfasst.

7. Verfahren nach einem der Ansprüche 1 bis 6, **dadurch gekennzeichnet, dass** das Eingeben des Registrierungscodes (**15**) und der persönlichen Identifikationsnummer (**16**) mittels einer Fernbedienung (**21**) des Hybridendgerätes (**10**) erfolgt.

8. Verfahren nach einem der Ansprüche 1 bis 7, **dadurch gekennzeichnet, dass** die Nutzdaten zumindest im Wesentlichen Videodaten und/oder Audiodaten umfassen.

9. Verfahren nach einem der Ansprüche 1 bis 8, **dadurch gekennzeichnet, dass** die Nutzdaten Kommunikations- und Freigabedaten umfassen.

10. Vorrichtung zur Authentifizierung von Benutzern eines Hybridendgerätes (**10**) umfassend,
zumindest ein Hybridendgerät (**10**) mit zumindest einer Internetschnittstelle und zumindest einer Breitbandschnittstelle,
eine Authentifizierungsvorrichtung (**13**), wobei die Authentifizierungsvorrichtung (**13**) einen Registrierungsserver, einen Applikationsserver, einen Authentifizierungsserver und zumindest ein Speichermedium umfasst,
und wobei das Hybridendgerät (**10**) über die Internetschnittstelle mit der Authentifizierungsvorrichtung (**13**) verbunden ist und über die Breitbandschnittstelle mit zumindest einem Dienstanbieter (**17, 18**) verbunden ist,
und wobei die Authentifizierungsvorrichtung (**13**) über eine zweite Internetverbindung (**20**) mit zumindest einem der Dienstanbieter (**17, 18**) verbunden ist,
ein internetfähiges Endgerät (**11**), dass über eine erste Internetverbindung (**12**) mit dem Registrierungsserver der Authentifizierungsvorrichtung (**13**) verbunden ist,
wobei der Registrierungsserver angepasst ist,
Benutzeridentifkationsdaten, die vom internetfähigen Endgerät (**11**) an den Registrierungsserver über die erste Internetverbindung (**12**) übermittelt werden, durch Vergleich von Benutzeridentifikationsdaten (**14**) mit einem vorgegebenen Benutzerreferenzdatensatz zu validieren und in dem Fall, dass die Benutzeridentifikationsdaten (**14**) dem vorgegebenen Benutzerreferenzdatensatz entsprechen,
die Benutzeridentifikationsdaten (**14**) des Benutzers auf dem Speichermedium zu speichern,
zumindest einen Registrierungscode (**15**) und zumindest eine persönlichen Identifikationsnummer (**16**) zu generieren, wobei der Registrierungscode (**15**) und/oder die persönliche Identifikationsnummer (**16**) dem Benutzer zugeordnet ist,
den Registrierungscode (**15**) von dem Registrierungsserver der Authentifizierungsvorrichtung (**13**) zu dem internetfähigen Endgerät (**11**) über die erste Internetverbindung (**12**) zu übermitteln und
die persönlichen Identifikationsnummer (**16**) von dem Registrierungsserver über eine separate Verbindung an den Benutzer oder an das internetfähige Endgerät (**11**) zu übermitteln,
und zu prüfen, ob eine dem Benutzer zugeordnete Profildatei (**19**) auf dem Hybridendgerät (**10**) vorhanden ist, wobei das Hybridendgerät (**10**) eingerichtet ist, über die Internetschnittstelle mit einem Applikationsserver der Authentifizierungsvorrichtung (**13**) zu kommunizieren und
im dem Fall, dass auf dem Hybridendgerät (**10**) die dem Benutzer zugeordnete Profildatei (**19**) vorhanden ist,
a) eine Authentifizierung durchzuführen, um festzustellen, ob der Benutzer zum Empfangen von Nutzdaten von dem Dienstanbieter (**17, 18**) berechtigt ist,
andernfalls
b) eine Erstauthentifizierung durchzuführen, um festzustellen, ob der Benutzer zum Empfangen der Nutzdaten von der Dienstanbieter (**17, 18**) und/oder zum Senden der Nutzdaten an den Dienstanbieter (**17, 18**) berechtigt ist,
die Profildatei (**19**) zu generieren, wobei die Profildatei (**19**) dem Benutzer zugeordnet ist,
die Profildatei (**19**) von dem Authentifizierungsserver der Authentifizierungsvorrichtung (**13**) über die Internetschnittstelle auf das Hybridendgerät (**10**) zu übertragen, wobei die Profildatei (**19**) auf dem Hybridendgerät (**10**) abgelegt wird,
sowie nach der Erstauthentifizierung oder der Authentifizierung, sofern der Benutzer als ein berechtigter Benutzer authentifiziert wurde,
eine Freigabenachricht an zumindest einen der Dienstanbieter (**17, 18**) zu übertragen und wobei
der Dienstanbieter (**17, 18**), an den die Übertragung der Freigabenachricht erfolgt ist, angepasst ist, die Nutzdaten von dem Dienstanbieter (**17, 18**) zu übermitteln,
wobei das Hybridendgerät (**10**) angepasst ist, zur Übermittelung der Nutzdaten über die Breitbandschnittstelle mit dem Dienstanbieter zu kommunizieren,
wobei der Registrierungsserver zum Durchführen der Erstauthentifizierung angepasst ist, die umfasst:
Eingeben des Registrierungscodes (**15**) und der persönlichen Identifikationsnummer (**16**) mittels des Hybridendgerätes (**10**),
Übermitteln des Registrierungscodes (**15**) und der persönlichen Identifikationsnummer (**16**) an einen Authentifizierungsserver der Authentifizierungsvorrichtung (**13**) über die Internetschnittstelle des Hybridendgerätes (**10**),
Prüfen des Registrierungscodes (**15**) und der persönlichen Identifikationsnummer (**16**) in dem Authentifizierungsserver der Authentifizierungsvorrichtung (**13**) durch Abgleich des Registrierungscodes (**15**) und der persönlichen Identifikationsnummer (**16**) mit den Benutzeridentifikationsdaten (**14**) der Benutzer, die auf dem Speichermedium der Authentifizierungsvorrichtung (**13**) gespeichert sind, und falls das Prüfen ergibt, dass der Registrierungscode (**15**) und
die persönliche Identifikationsnummer (**16**) einem der Benutzer zuordenbar sind,
Feststellen, dass dieser Benutzer zum Empfangen der Nutzdaten von dem Dienstanbieter (**17, 18**) und/oder zum Senden der Nutzdaten an den Dienstanbieter (**17, 18**) berechtigt ist.

## Claims

1. Method for the authentication of users of a hybrid terminal (10),
wherein the hybrid terminal (10) communicates via at least one internet interface and communicates via at least one broadband interface with at least one service provider (17, 18),
with at least one first registration step comprising
entry of user identification data (14) of at least one of the users by means of an internet-capable terminal (11),
requesting the user to enter a personal identification number (16) by means of the internet-capable terminal (11), wherein the personal identification number (16) is capable of being freely chosen by the user,
and in the event that entry of the personal identification number (16) has been carried out by the user, forwarding of the personal identification number (16) from the internet-capable terminal (11) to a registration server of an authentication apparatus (13) via a first internet connection (12),
forwarding of the user identification data (14) of the user from the internet-capable terminal (11) to the registration server of the authentication apparatus (13) via the first internet connection (12),
validation of the user identification data (14) which are present on the registration server, by comparison of the user identification data (14) with a predetermined user reference data record, and in the event that the user identification data correspond to the predetermined user reference data record, storage of the user identification data (14) of the user on a storage medium of the authentication apparatus (13),
generation of at least one registration code (15), wherein the registration code (15) is assigned to the user,
and in the event that entry of the personal identification number (16) by the user has not taken place, generation of at least the personal identification number (16), wherein the personal identification number (16) is assigned to the user,
forwarding of the registration code (15) from the registration server of the authentication apparatus (13) to the internet-capable terminal (11) via the first internet connection (12) and
in the event that entry of the personal identification number (16) by the user has not taken place, forwarding of the personal identification number (16) from the registration server via a separate connection to the user or to the internet-capable terminal (11),
and an authentication step comprising
checking whether a profile file (19) assigned to the user is present on the hybrid terminal (10), wherein the hybrid terminal (10) communicates via the internet interface with an application server of the authentication apparatus (13) and
in the event that the profile file (19) assigned to the user is present on the hybrid terminal (10),
a) carrying out an authentication in order to establish whether the user is authorised to receive user data from the service provider (17, 18) and/or to send user data to the service provider (17, 18),
or otherwise
b) carrying out an initial authentication in order to establish whether the user is authorised to receive the user data from the service provider (17, 18) and/or to send the user data to the service provider (17, 18),
and in the event that the initial authentication shows that the user is authorised,
generation of the profile file (19), wherein the profile file (19) is assigned to the user,
transfer of the profile file (19) from the authentication server of the authentication apparatus (13) via the internet interface to the hybrid terminal (10), wherein the profile file (19) is filed on the hybrid terminal (10),
and after carrying out the initial authentication or carrying out the authentication, provided that the user has been authenticated as an authorised user, transmission of a clearance message to at least one of the service providers (17, 18) and
forwarding of the user data from the service provider (17, 18) to which transmission of the clearance message has taken place, wherein the hybrid terminal (10) communicates with the service provider (17, 18) for forwarding of the user data via the broadband interface, wherein
carrying out the initial authentication comprises:
entry of the registration code (15) and the personal identification number (16) by means of the hybrid terminal (10),
forwarding of the registration code (15) and the personal identification number (16) to an authentication server of the authentication apparatus (13) via the internet interface of the hybrid terminal (10),
checking of the registration code (15) and personal identification number (16) in the authentication server of the authentication apparatus (13) by comparison of the registration code (15) and personal identification number (16) with the user identification data (14) of the users who are stored on the storage medium of the authentication apparatus (13), and in the event that checking shows that the registration code (15) and personal identification number (16) can be assigned to one of the users,
establishing that this user is authorised to receive the user data from the service provider (17, 18) and/or to send the user data to the service provider (17, 18).

2. Method according to claim 1, **characterised in that** carrying out the authentication comprises:
transfer of the profile file (19) which is filed on the hybrid terminal (10) to the authentication server of the authentication apparatus (13) via the internet interface of the hybrid terminal (10),
checking of the profile file (19) in the authentication server of the authentication apparatus (13) by comparison of the profile file (19) with the user identification data (14) of the users who are stored on the storage medium of the authentication apparatus (13), and in the event that checking shows that the profile file (19) can be assigned to one of the users,
establishing that this user is authorised to receive the user data from the service provider (17, 18) and/or to send the user data to the service provider (17, 18).

3. Method according to claim 1, **characterised in that** carrying out the authentication comprises:
entry of the personal identification number (16) by means of the hybrid terminal,
transfer of the profile file (19) which is filed on the hybrid terminal (10) and of the personal identification number (19) to the authentication server of the authentication apparatus (13) via the internet interface of the hybrid terminal (10),
checking of the personal identification number (16) and profile file (19) in the authentication server of the authentication apparatus (13) by comparison of the personal identification number (16) and profile file (19) with the user identification data (14) of the users who are stored on the storage medium of the authentication apparatus (13), and in the event that checking shows that the personal identification number (16) and profile file (19) can be assigned to one of the users,
establishing that this user is authorised to receive the user data from the service provider (17, 18) and/or to send the user data to the service provider (17, 18).

4. Method according to any one of claims 1 to 3, **characterised in that** the hybrid terminal (10) communicates via the internet interface and the broadband interface according to the HbbTV standard, by the fact that the hybrid terminal (10) is designed as an HbbTV terminal.

5. Method according to any one of claims 1 to 4, **characterised in that** communication between the internet-capable terminal (11) and the authentication apparatus (13) takes place via a secure internet connection by means of a secure hypertext transfer protocol.

6. Method according to any one of claims 1 to 5, **characterised in that** the registration code (15) comprises exclusively numerical characters.

7. Method according to any one of claims 1 to 6, **characterised in that** entry of the registration code (15) and personal identification number (16) is effected by means of a remote control (21) of the hybrid terminal (10).

8. Method according to any one of claims 1 to 7, **characterised in that** the user data comprise at least substantially video data and/or audio data.

9. Method according to any one of claims 1 to 8, **characterised in that** the user data comprise communications and clearance data.

10. Apparatus for the authentication of users of a hybrid terminal (10) comprising
at least one hybrid terminal (10) with at least one internet interface and at least one broadband interface,
an authentication apparatus (13), wherein the authentication apparatus (13) comprises a registration server, an application server, an authentication server and at least one storage medium,
and wherein the hybrid terminal (10) is connected via the internet interface to the authentication apparatus (13) and via the broadband interface to at least one service provider (17, 18),
and wherein the authentication apparatus (13) is connected via a second internet connection (20) to at least one of the service providers (17, 18),
an internet-capable terminal (11) which is connected via a first internet connection (12) to the registration server of the authentication apparatus (13), wherein the registration server is adapted
to validate user identification data which are forwarded from the internet-capable terminal (11) to the registration server via the first internet connection (12), by comparison of user identification data (14) with a predetermined user reference data record, and in the event that the user identification data (14) correspond to the predetermined user reference data record,
to store the user identification data (14) of the user on the storage medium,
to generate at least one registration code (15) and at least one personal identification number (15), wherein the registration code (15) and/or the personal identification number (16) is assigned to the user,
to forward the registration code (15) from the registration server of the authentication apparatus (13) to the internet-capable terminal (11) via the first internet connection (12) and
to forward the personal identification number (16) from the registration server via a separate connection to the user or to the internet-capable terminal (11),
and to check whether a profile file (19) assigned to the user is present on the hybrid terminal (10), wherein the hybrid terminal (10) is designed to communicate via the internet interface with an application server of the authentication apparatus (13) and
in the event that the profile file (19) assigned to the user is present on the hybrid terminal (10),
a) to carry out an authentication in order to establish whether the user is authorised to receive user data from the service provider (17, 18),
or otherwise
b) to carry out an initial authentication in order to establish whether the user is authorised to receive the user data from the service provider (17, 18) and/or to send the user data to the service provider (17, 18),
to generate the profile file (19), wherein the profile file (19) is assigned to the user,
to transfer the profile file (19) from the authentication server of the authentication apparatus (13) via the internet interface to the hybrid terminal (10), wherein the profile file (19) is filed on the hybrid terminal (10),
and after the initial authentication or the authentication, provided that the user has been authenticated as an authorised user,
to transmit a clearance message to at least one of the service providers (17, 18) and
to forward the user data from the service provider (18) to which transmission of the clearance message has taken place, wherein the hybrid terminal (10) is adapted to communicate with the service provider for forwarding of the user data via the broadband interface, wherein the registration server is adapted to carry out the initial authentication, which comprises:
entry of the registration code (15) and the personal identification number (16) by means of the hybrid terminal (10),
forwarding of the registration code (15) and the personal identification number (16) to an authentication server of the authentication apparatus (13) via the internet interface of the hybrid terminal (10),
checking of the registration code (15) and personal identification number (16) in the authentication server of the authentication apparatus (13) by comparison of the registration code (15) and personal identification number (16) with the user identification data (14) of the users who are stored on the storage medium of the authentication apparatus (13), and in the event that checking shows that the registration code (15) and personal identification number (16) can be assigned to one of the users,
establishing that this user is authorised to receive the user data from the service provider (17, 18) and/or to send the user data to the service provider (17, 18).

## Revendications

1. Procédé pour l'authentification d'utilisateurs d'un terminal hybride (10),
le terminal hybride (10) communiquant par l'intermédiaire d'au moins une interface internet et communiquant par l'intermédiaire d'au moins une interface large bande avec au moins un prestataire de services (17, 18),
avec au moins une première étape d'enregistrement comprenant :
l'entrée de données d'identification d'utilisateur (14) d'au moins l'un des utilisateurs à l'aide d'un terminal compatible internet (11),
l'invitation de l'utilisateur à entrer un numéro d'identification personnel (16) à l'aide du terminal (11) compatible internet, le numéro d'identification personnel (16) pouvant être librement choisi par l'utilisateur,
et si l'entrée du numéro d'identification personnel (16) par l'utilisateur a eu lieu, la transmission du numéro d'identification personnel (16) par le terminal (11) compatible internet à un serveur d'enregistrement d'un dispositif d'authentification (13) par l'intermédiaire d'une première connexion internet (12),
la transmission des données d'identification d'utilisateur (14) de l'utilisateur par le terminal (11) compatible internet au serveur d'enregistrement du dispositif d'authentification (13) par l'intermédiaire de la première connexion internet (12),
la validation des données d'identification d'utilisateur (14) se trouvant sur le serveur d'enregistrement en comparant les données d'identification d'utilisateur (14) avec un jeu de données de référence d'utilisateurs prescrit,
et dans le cas où les données d'identification d'utilisateur correspondent au jeu de données de référence d'utilisateurs prescrit,
l'enregistrement des données d'identification d'utilisateur (14) de l'utilisateur sur un support d'enregistrement du dispositif d'authentification (13),
la génération d'au moins un code d'enregistrement (15), le code d'enregistrement (15) étant associé à l'utilisateur,
et si l'entrée du numéro d'identification personnel (16) par l'utilisateur n'a pas eu lieu, la génération au moins du numéro d'identification personnel (16), le numéro d'identification personnel (16) étant associé à l'utilisateur,
la transmission du code d'enregistrement (15) par le serveur d'enregistrement du dispositif d'authentification (13) au terminal (11) compatible internet par l'intermédiaire de la première connexion internet (12) et
si l'entrée du numéro d'identification personnel (16) par l'utilisateur n'a pas eu lieu, la transmission du numéro d'identification personnel (16) par le serveur d'enregistrement, via une connexion séparée, à l'utilisateur ou au terminal (11) compatible internet,
et une étape d'authentification comprenant :
la vérification de si un fichier de profil (19) associé à l'utilisateur se trouve sur le terminal hybride (10), le terminal hybride (10) communiquant par l'intermédiaire de l'interface internet avec un serveur d'applications du dispositif d'authentification (13) et
dans le cas où le fichier de profil (19) associé à l'utilisateur se trouve sur le terminal hybride (10),
a) l'exécution d'une authentification afin de déterminer si l'utilisateur est autorisé à recevoir des données utiles du prestataire de services (17, 18) et/ou à envoyer des données utiles au prestataire de services (17, 18),
sinon
b) l'exécution d'une première authentification afin de déterminer si l'utilisateur est autorisé à recevoir les données utiles du prestataire de services (17, 18) et/ou à envoyer les données utiles au prestataire de services (17, 18),
et si la première authentification a pour résultat que l'utilisateur détient l'autorisation,
la génération du fichier de profil (19), le fichier de profil (19) étant associé à l'utilisateur,
le transfert du fichier de profil (19) du serveur d'authentification du dispositif d'authentification (13) via l'interface internet vers le terminal hybride (10), le fichier de profil (19) étant enregistré sur le terminal hybride (10),
ainsi que, après l'exécution de la première authentification ou l'exécution de l'authentification, dans la mesure où l'utilisateur a été authentifié comme étant un utilisateur autorisé,
le transfert d'un message de validation à au moins l'un des prestataires de services (17, 18) et
la transmission des données utiles par le prestataire de services (17, 18) auquel le message de validation a été transféré, le terminal hybride (10) communiquant avec le prestataire de services (17, 18) pour la transmission des données utiles via l'interface large bande,
l'exécution de la première authentification comprenant :
l'entrée du code d'enregistrement (15) et du numéro d'identification personnel (16) à l'aide du terminal hybride (10),
la transmission du code d'enregistrement (15) et du numéro d'identification personnel (16) à un serveur d'authentification du dispositif d'authentification (13) via l'interface internet du terminal hybride (10),
la vérification du code d'enregistrement (15) et du numéro d'identification personnel (16) dans le serveur d'authentification du dispositif d'authentification (13) en comparant le code d'enregistrement (15) et le numéro d'identification personnel (16) avec les données d'identification d'utilisateur (14) des utilisateurs qui sont enregistrées sur le support d'enregistrement du dispositif d'authentification (13), et si la vérification a pour résultat que le code d'enregistrement (15) et le numéro d'identification personnel (16) peuvent être associés à l'un des utilisateurs,
la détermination du fait que cet utilisateur est autorisé à recevoir les données utiles du prestataire de services (17, 18) et/ou à envoyer les données utiles au prestataire de services (17, 18).

2. Procédé selon la revendication 1, **caractérisé en ce que** l'exécution de l'authentification comprend :
le transfert du fichier de profil (19) qui est enregistré sur le terminal hybride (10) au serveur d'authentification du dispositif d'authentification (13) via l'interface internet du terminal hybride (10),
la vérification du fichier de profil (19) dans le serveur d'authentification du dispositif d'authentification (13) en comparant le fichier de profil (19) avec les données d'identification d'utilisateur (14) des utilisateurs qui sont enregistrées sur le support d'enregistrement du dispositif d'authentification (13), et si la vérification a pour résultat que le fichier de profil (19) peut être associé à l'un des utilisateurs,
la détermination du fait que cet utilisateur est autorisé à recevoir les données utiles du prestataire de services (17, 18) et/ou à envoyer les données utiles au prestataire de services (17, 18).

3. Procédé selon la revendication 1, **caractérisé en ce que** l'exécution de l'authentification comprend :
l'entrée du numéro d'identification personnel (16) à l'aide du terminal hybride,
le transfert du fichier de profil (19) qui est enregistré sur le terminal hybride (10) ainsi que du numéro d'identification personnel (19) au serveur d'authentification du dispositif d'authentification (13) via l'interface internet du terminal hybride (10),
la vérification du numéro d'identification personnel (16) et du fichier de profil (19) dans le serveur d'authentification du dispositif d'authentification (13) en comparant le numéro d'identification personnel (16) et le fichier de profil (19) avec les données d'identification d'utilisateur (14) des utilisateurs qui sont enregistrées sur le support d'enregistrement du dispositif d'enregistrement (13), et si la vérification a pour résultat que le numéro d'identification personnel (16) et le fichier de profil (19) peuvent être associés à l'un des utilisateurs,
la détermination du fait que cet utilisateur est autorisé à recevoir les données utiles du prestataire de services (17, 18) et/ou à envoyer les données utiles au prestataire de services (17, 18).

4. Procédé selon l'une des revendications 1 à 3, **caractérisé en ce que** le terminal hybride (10) communique via l'interface internet et via l'interface large bande conformément au standard HbbTV **en ce que** le terminal hybride (10) est réalisé en tant que terminal HbbTV.

5. Procédé selon l'une des revendications 1 à 4, **caractérisé en ce que** la communication entre le terminal (11) compatible internet et le dispositif d'authentification (13) s'effectue via une connexion internet sécurisée à l'aide d'un protocole de transmission hypertexte sécurisé.

6. Procédé selon l'une des revendications 1 à 5, **caractérisé en ce que** le code d'enregistrement (15) comprend exclusivement des caractères numériques.

7. Procédé selon l'une des revendications 1 à 6, **caractérisé en ce que** l'entrée du code d'enregistrement (15) et du numéro d'identification personnel (16) s'effectue à l'aide d'une télécommande (21) du terminal hybride (10).

8. Procédé selon l'une des revendications 1 à 7, **caractérisé en ce que** les données utiles comprennent au moins essentiellement des données vidéo et/ou des données audio.

9. Procédé selon l'une des revendications 1 à 8, **caractérisé en ce que** les données utiles comprennent des données de communication et de validation.

10. Dispositif pour l'authentification d'utilisateurs d'un terminal hybride (10) comprenant :
au moins un terminal hybride (10) avec au moins une interface internet et au moins une interface large bande,
un dispositif d'authentification (13), le dispositif d'authentification (13) comprenant un serveur d'enregistrement, un serveur d'applications, un serveur d'authentification et au moins un support d'enregistrement,
et le terminal hybride (10) étant connecté via l'interface internet au dispositif d'authentification (13) et via l'interface large bande avec au moins un prestataire de services (17, 18),
et le dispositif d'authentification (13) étant connecté via une deuxième connexion internet (20) avec au moins l'un des prestataires de services (17, 18),
un terminal (11) compatible internet, lequel est connecté via une première connexion internet (12) au serveur d'enregistrement du dispositif d'authentification (13),
le serveur d'enregistrement étant adapté pour
la validation de données d'identification d'utilisateur qui sont transmises par le terminal (11) compatible internet au serveur d'enregistrement via la première connexion internet (12), en comparant des données d'identification d'utilisateur (14) avec un jeu de données de référence d'utilisateurs prescrit, et dans le cas où les données d'identification d'utilisateur (14) correspondent au jeu de données de référence d'utilisateurs prescrit,
l'enregistrement des données d'identification d'utilisateur (14) de l'utilisateur sur le support d'enregistrement,
la génération d'au moins un code d'enregistrement (15) et d'au moins un numéro d'identification personnel (16), le code d'enregistrement (15) et/ou le numéro d'identification personnel (16) étant associé(s) à l'utilisateur,
la transmission du code d'enregistrement (15) par le serveur d'enregistrement du dispositif d'authentification (13) au terminal (11) compatible internet via la première connexion internet (12), et
la transmission du numéro d'identification personnel (16) par le serveur d'enregistrement, via une connexion séparée, à l'utilisateur ou au terminal (11) compatible internet,
et pour la vérification de si un fichier de profil (19) associé à l'utilisateur existe sur le terminal hybride (10), le terminal hybride (10) étant étudié pour communiquer via l'interface internet avec un serveur d'applications du dispositif d'authentification (13) et
dans le cas où le fichier de profil (19) associé à l'utilisateur existe sur le terminal hybride (10),
a) pour l'exécution d'une authentification afin de déterminer si l'utilisateur est autorisé à recevoir des données utiles du prestataire de services (17, 18),
sinon
b) pour l'exécution d'une première authentification afin de déterminer si l'utilisateur est autorisé à recevoir les données utiles du prestataire de services (17, 18) et/ou à envoyer les données utiles au prestataire de services (17, 18),
la génération du fichier de profil (19), le fichier de profil (19) étant associé à l'utilisateur,
le transfert du fichier de profil (19) par le serveur d'authentification du dispositif d'authentification (13) via l'interface internet au terminal hybride (10), le fichier de profil (19) étant enregistré sur le terminal hybride (10),
ainsi que, après la première authentification ou l'authentification, dans la mesure où l'utilisateur a été authentifié comme étant un utilisateur autorisé,
le transfert d'un message de validation à au moins l'un des prestataires de services (17, 18), et
le prestataire de services (17, 18) auquel le message de validation a été transféré étant adapté pour transmettre les données utiles du prestataire de services (17, 18),
le terminal hybride (10) étant adapté pour communiquer avec le prestataire de services via l'interface large bande pour la transmission des données utiles,
le serveur d'enregistrement étant adapté pour exécuter la première authentification, laquelle comprend :
l'entrée du code d'enregistrement (15) et du numéro d'identification personnel (16) à l'aide du terminal hybride (10),
la transmission du code d'enregistrement (15) et du numéro d'identification personnel (16) à un serveur d'authentification du dispositif d'authentification (13) via l'interface internet du terminal hybride (10),
la vérification du code d'enregistrement (15) et du numéro d'identification personnel (16) dans le serveur d'authentification du dispositif d'authentification (13) en comparant le code d'enregistrement (15) et le numéro d'identification personnel (16) avec les données d'identification d'utilisateur (14) des utilisateurs qui sont enregistrées sur le support d'enregistrement du dispositif d'authentification (13), et si la vérification a pour résultat que le code d'enregistrement (15) et le numéro d'identification personnel (16) peuvent être associés à l'un des utilisateurs,
la détermination que cet utilisateur est autorisé à recevoir les données utiles du prestataire de services (17, 18) et/ou à envoyer les données utiles au prestataire de services (17, 18).
